# EUROPEAN PATENT APPLICATION

(11) **EP 4 821 826 A1**
(43) Date of publication of application: **14.10.2026**
(21) Application number: 24922691.1
(22) Date of filing: 30.09.2024
(51) Int. Cl.: B64D 35/023, B64D 33/10, B64U 20/98, B64U 50/11, B64U 50/12, B64U 50/19, B64U 50/33, F16H 1/06, H02K 7/116

(54) **PROPULSION DEVICE FOR AIRCRAFT**

(30) Priority: 09.02.2024 JP 2024018480
(71) Applicant: Hitachi, Ltd., Tokyo 100-8280 (JP)
(72) Inventor: KAWASHIMA Tetsuya, Tokyo 100-8280 (JP); NAKATSU Kinya, Tokyo 100-8280 (JP); TAKAHATA Ryouichi, Tokyo 100-8280 (JP); NAKATSUGAWA Junnosuke, Tokyo 100-8280 (JP); KAMIZUMA Hiroshi, Tokyo 100-8280 (JP)
(74) Representative: Manitz Finsterwald Patent- und Rechtsanwaltspartnerschaft mbB
(86) International application number: PCT/JP2024/034993
(87) International publication number: WO 2025/169537

(57) **Abstract**

The present invention enables reductions in size and weight of a hybrid propulsion system for aircraft. A propulsion device for an aircraft according to the present invention comprises: an engine 30 that outputs rotational force; a propeller 20 that generates propulsion force; a motor 50 that outputs rotational force; an input shaft 41 that has a first cog (first gear) 44 and receives the rotational force output from the engine 30; an output shaft 42 that has a second cog (second gear) 45 and outputs rotational force to the propeller 20; and an intermediate shaft 43 that has a third cog (third gear) 46 and a fourth cog (fourth gear) 47. The first cog 44 and the third cog 46 mesh with each other, and the second cog 45 and the fourth cog 47 mesh with each other. The motor 50 is connected to the intermediate shaft 43, and the rotational force from the motor 50 is input to the intermediate shaft 43.

## Description

### Technical Field

The present invention relates to a propulsion device in which a propulsion device for an aircraft that rotates a propeller or a fan by an engine is combined with a motor that is an electric motor, and the motor is used for propulsion force assistance and generation of electric power.

### Background Art

An aircraft generally includes a fuselage, a wing portion, and a propulsion system that provides thrust. The propulsion system is mounted, for example, in a nacelle portion suspended from the wing portion. There are a plurality of types of propulsion systems according to the scale of an aircraft, and a turboprop engine is often used for a small passenger aircraft seating several tens of persons.

In an aircraft having a turboprop engine as a propulsion system, an output shaft of a turbine needs to maintain a high rotation speed in order to maintain efficiency of the engine, while the rotation speed of a propeller shaft needs to be limited so that blade tips do not exceed the speed of sound. In order to set each of the turbine and the propeller to an optimum rotation speed, a speed reducer is used in many turboprop engines between the output shaft of the turbine and the propeller shaft.

In addition, from viewpoints such as reduction in fuel consumption of aircraft engines and reduction in CO2 emissions, demand for hybridization in which engine output is assisted by an electric motor is increasing.

As one example of a system that realizes hybrid propulsion of an aircraft, PTL 1 describes that a propulsion system for an aircraft includes a propulsion device, a turbomachine that is mechanically coupled to the propulsion device in a combustion operation mode and mechanically decoupled from the propulsion device in an electric operation mode, and an electric machine, and that the electric machine is electrically connected to a power source and mechanically coupled to the propulsion device so that, in the electric operation mode, the propulsion device is driven by the electric machine. An example describes a configuration using a pair of turbofan engines attached below wings and a hybrid engine attached to a rear portion of an airframe.

### Citation List

### Patent Literature

PTL 1: JP 2019-51922 A

### Summary of Invention

### Technical Problem

A propulsion system of an aircraft needs to be mounted in a limited space inside a nacelle, and airframe weight greatly affects required output and cruising range, and therefore a small and lightweight hybrid propulsion system is required.

An object of the present invention is to propose a new propulsion device for an aircraft that solves the above problem.

### Solution to Problem

One embodiment of the present invention is configured as follows.

An engine that outputs rotational force;
a propeller that generates propulsion force;
a motor that outputs rotational force;
an input shaft that has a first cog and receives the rotational force output from the engine;
an output shaft that has a second cog and outputs rotational force to the propeller;
and an intermediate shaft that has a third cog and a fourth cog
are included, and
the first cog and the third cog mesh with each other,
the second cog and the fourth cog mesh with each other, and
the motor is connected to the intermediate shaft, and the rotational force from the motor is input to the intermediate shaft.

### Advantageous Effects of Invention

According to the present invention, a propulsion device of an aircraft can be hybridized without increasing the size of the propulsion device, and reduction in energy consumption and reduction in CO2 emissions can be achieved.

Problems, configurations, and effects other than those described above will be clarified by the following description of embodiments.

### Brief Description of Drawings

[FIG. 1] FIG. 1 is a schematic top view of an aircraft mounted with a propulsion device according to the present invention.
[FIG. 2] FIG. 2 is a schematic diagram illustrating an external appearance of a state in which the propulsion device according to the present invention is stored in a nacelle.
[FIG. 3] FIG. 3 is a schematic diagram illustrating a configuration of a propulsion device according to a comparative example with the present invention.
[FIG. 4] FIG. 4 is a schematic diagram illustrating a configuration of a propulsion device according to a first example of the present invention.
[FIG. 5] FIG. 5 is a schematic diagram illustrating configurations of a speed reducer and a motor of the propulsion device according to the first example of the present invention.
[FIG. 6] FIG. 6 is a schematic diagram illustrating external appearances of the speed reducer and the motor of the propulsion device according to the first example of the present invention.
[FIG. 7] FIG. 7 is a schematic diagram illustrating configurations of a speed reducer and a motor of a propulsion device according to a second example of the present invention.
[FIG. 8] FIG. 8 is a schematic diagram illustrating external appearances of the speed reducer and the motor of the propulsion device according to the second example of the present invention.
[FIG. 9] FIG. 9 is a schematic diagram illustrating configurations of a speed reducer and a motor of a propulsion device according to a third example of the present invention.

### Description of Embodiments

Embodiments of a propulsion device for an aircraft (hybrid propulsion device) according to the present invention will be described below with reference to the drawings. Note that in the drawings used in the present specification, the same one or similar reference signs are assigned to identical or corresponding constituent elements, and repeated description of these constituent elements may be omitted.

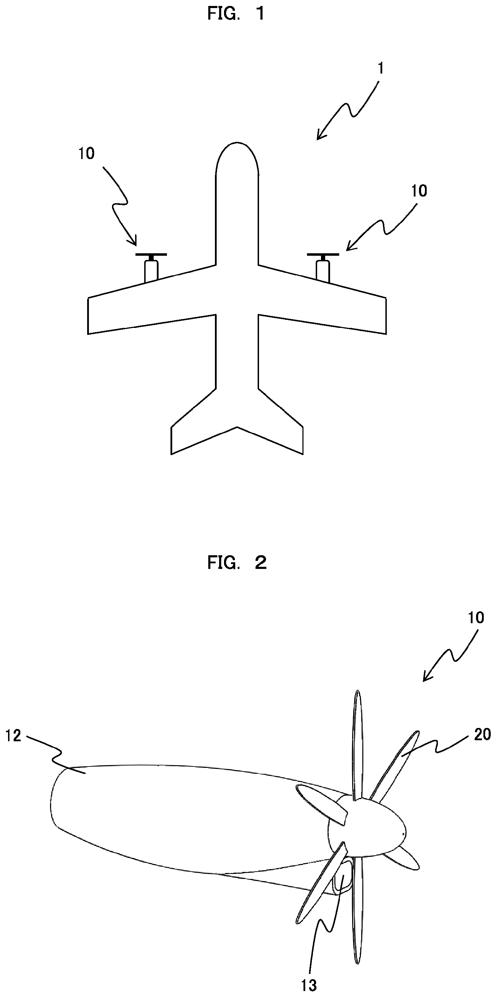

FIG. 1 is a schematic top view of an aircraft 1 mounted with the propulsion device according to the present invention.

The aircraft 1 has a propulsion device 10 using a propeller below a wing portion. The propulsion device 10 is configured as a hybrid propulsion device in which an engine 30 and a motor 50 are combined.

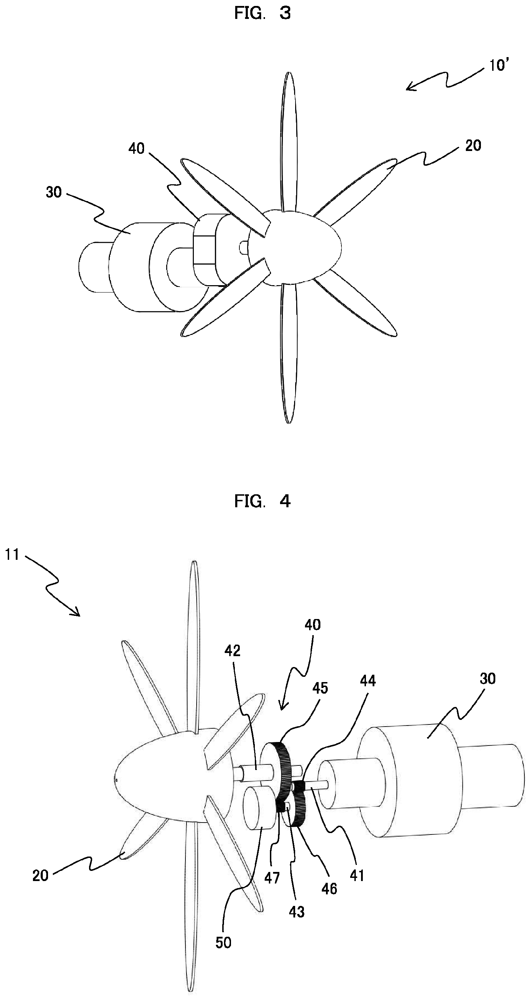

FIG. 2 is a schematic diagram illustrating an external appearance of a state in which the propulsion device 10 according to the present invention is stored in a nacelle 12. FIG. 3 is a schematic diagram illustrating a configuration of a propulsion device 10' according to a comparative example with the present invention.

The comparative example of FIG. 3 illustrates a configuration of the propulsion device 10' that does not have a hybrid configuration and operates using only a turbine engine as an output source. The propulsion device 10' compresses air taken in from an air intake 13 by the turbine engine 30, combusts the air together with fuel, and rotates a turbine using force at the time of expansion. The rotational force is transmitted to a shaft of a propeller 20 via a speed reducer 40, and the aircraft 1 is propelled by rotation of the propeller 20.

### [First Example]

A first example of the propulsion device 10 according to the present invention will be described with reference to FIGS. 4 to 6.

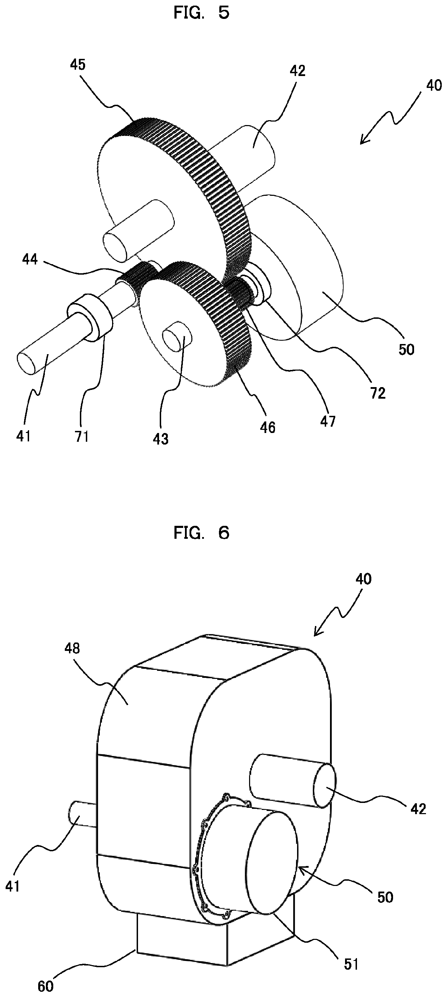

An overall configuration of the propulsion device 10 will be described with reference to FIGS. 4 and 5. FIG. 4 is a schematic diagram illustrating a configuration of the propulsion device 10 according to the first example of the present invention. FIG. 5 is a schematic diagram illustrating configurations of a speed reducer and a motor of the propulsion device 10 according to the first example of the present invention. In FIGS. 4 and 5, a case of the speed reducer 40 is omitted in order to illustrate a connection configuration between shafts and cogs.

The propulsion device 10 illustrated in FIG. 4 includes the propeller 20, the engine 30, the speed reducer 40, the motor 50, and the like. The engine 30 is configured as a gas turbine engine, and rotational force generated by each of the engine 30 and the motor 50, which is an electric motor, is mechanically connected via the speed reducer 40 to a propeller shaft 42 that is a rotation shaft of the propeller 20.

Among these components, the speed reducer 40 includes an engine shaft (input shaft) 41 that is an output shaft of the engine 30, the propeller shaft (output shaft) 42 that is the rotation shaft of the propeller 20, a first gear (first cog) 44 that is integrated with the engine shaft 41 and has the same rotation axis as the engine shaft 41, a second gear (second cog) 45 that is integrated with the propeller shaft 42 and has the same rotation axis as the propeller shaft 42, an intermediate shaft 43, a third gear (third cog) 46 that is integrated with the intermediate shaft 43, has the same rotation axis as the intermediate shaft 43, and meshes with the first gear 44, a fourth gear (fourth cog) 47 that is integrated with the intermediate shaft 43, has the same rotation axis as the intermediate shaft 43, and meshes with the second gear 45, and the like. The intermediate shaft 43 is a shaft disposed between the engine shaft 41 and the propeller shaft 42 in a transmission path of rotational force from the engine shaft 41 to the propeller shaft 42.

Here, having the same rotation axis or being coaxially disposed means that center axes of rotation are the same, and does not necessarily mean that the rotation axis is configured by one member. For example, the engine shaft 41 and a rotation shaft of the first gear 44 may be configured by different members, and may be configured such that a center axis of the engine shaft 41 and a center axis of the rotation shaft of the first gear 44 coincide with each other. Note that the number of parts can be reduced by configuring the engine shaft 41 and the rotation shaft of the first gear 44 by the same member.

There is a relationship of N1<N3 between the number of teeth N1 of the first gear 44 and the number of teeth N3 of the third gear 46, and there is a relationship of N2<N4 between the number of teeth N2 of the second gear 45 and the number of teeth N4 of the fourth gear 47.

With the configuration described above, rotation of output of the engine 30 is reduced in two stages and transmitted to the propeller 20. In an aircraft having a turboprop engine as a propulsion system, the output shaft of the turbine needs to maintain a high rotation speed in order to maintain efficiency of the engine. On the other hand, the rotation speed of the propeller shaft needs to be limited to a relatively low rotation speed so that blade tips do not exceed the speed of sound. For this reason, the structure of the speed reducer 40 described above can be said to be a structure suitable for an aircraft in which a ratio between optimum rotation speeds of the engine shaft 41 and the propeller shaft 42 is large. The rotation speed ratio between the engine shaft 41 and the propeller shaft 42 is, for example, approximately 15:1.

Therefore, in the present example, a rotation speed Ri of the engine shaft 41, a rotation speed Ro of the propeller shaft 42, and a rotation speed Rm of the intermediate shaft 43 are set to have a relationship of Ri>Rm>Ro.

As illustrated in FIGS. 4 and 5, output of the motor 50 is transmitted to rotation of the propeller 20 by connecting a rotation shaft of the motor 50 to the intermediate shaft 43. With such a configuration, an increase in the number of rotation shafts accompanying hybridization of the propulsion device 10' becomes unnecessary, and an increase in size and an increase in weight of the propulsion device 10 can be suppressed to be small. In addition, in designing the motor 50, it can be said that designing a motor suitable for an intermediate rotation speed (approximately 5000 rpm as one example) between the high rotation speed of the engine shaft 41 (approximately 20000 rpm as one example) and the low rotation speed of the propeller shaft 42 (approximately 1200 rpm as one example) is relatively easy.

The engine shaft 41 that is a rotation shaft of the engine (first power source) 30 and the intermediate shaft 43 that is a rotation shaft of the motor (second power source) 50 may be configured so that the power sources 30 and 50 and shafts on a speed reducer side can be disconnected from each other by providing clutches 71 and 72 between the power sources 30 and 50 and the gears 44 and 46. The clutch 71 is provided to the engine shaft 41, and disconnects and connects the engine (first power source) 30 and the engine shaft 41 on a side of the speed reducer 40. The clutch 72 is provided to the intermediate shaft 43, and disconnects and connects the motor (second power source) 50 and the intermediate shaft 43 on the side of the speed reducer 40.

That is, the rotation shaft of the motor 50 and the intermediate shaft (intermediate axis) 43 are connected via the clutch 72, and coupling and disconnection between the rotation shaft of the motor 50 and the intermediate shaft (intermediate axis) 43 can be controlled by operating the clutch 72 according to an operating state. In addition, a rotation shaft of the engine 30 and the engine shaft (input shaft) 41 are connected via the clutch 71, and coupling and disconnection between the rotation shaft of the engine 30 and the engine shaft 41 can be controlled by operating the clutch 71 according to the operating state.

In this case, only output of the engine 30 may drive the propeller 20 in a specific operating operation of the propulsion device 10, and only output of the motor 50 may drive the propeller 20 in another operating operation. Alternatively, output of both the engine 30 and the motor 50 may drive the propeller 20 at the same time. In addition, the motor 50 may operate as a generator and convert rotational force into electric power to extract the electric power. The extracted electric power is supplied to the outside.

Assistance of the engine 30 by the motor 50 is performed in a situation in which output higher than usual is required, such as during takeoff or ascent, or when an abnormality occurs in one propulsion device of a twin-engine aircraft. When propulsion with relatively low output is possible, such as during cruising, propulsion can be performed by operating the propeller 20 with output of only the motor 50. Alternatively, a part of output of the engine 30 can also be used for generation of electric power by operating the motor 50 as a generator. Furthermore, when rotation of the propeller 20 becomes unnecessary, such as during gliding, the motor 50 can also be used to fix rotation of the propeller 20 by appropriately controlling the motor 50.

FIG. 6 is a schematic diagram illustrating external appearances of the speed reducer 40 and the motor 50 of the propulsion device 10 according to the first example of the present invention.

In the present example, the speed reducer 40 is accommodated in a speed reducer case 48, and a housing 51 of the motor 50 and a stator corresponding to an outer periphery of the motor are mechanically connected to an outer wall of the speed reducer case 48. That is, the speed reducer 40 is disposed inside the speed reducer case 48, and the stator of the motor 50 is fixed to the speed reducer case 48. Here, the stator of the motor 50 being fixed to the speed reducer case 48 includes a case in which the stator is directly fixed to the speed reducer case 48, and a case in which the stator is indirectly fixed to the speed reducer case 48 via another member or another part.

On the other hand, a rotor corresponding to an inner periphery of the motor is disposed coaxially with the intermediate shaft 43. That is, the rotor of the motor 50 is disposed so that a center axis of rotation overlaps the intermediate shaft 43, and is connected to the intermediate shaft 43. In consideration of maintainability such as replacement and repair of the motor 50, the speed reducer case 48 and the housing 51 of the motor 50 are configured as separate bodies that can be separated.

The propulsion device 10 is provided with a battery (not illustrated) for driving the motor 50 and an inverter 60. For example, a structure can be considered in which the battery is mounted on an airframe side outside the nacelle 12, and electric power is supplied to the motor 50 through wiring. In addition, regarding the inverter 60, for example, a structure can be considered in which the inverter 60 is disposed on an outer wall of the speed reducer case 48. In this case, the inverter 60 is preferably mounted on the outer wall of the speed reducer case 48 near the motor 50. This makes it possible, in hybridization of a propulsion device, to realize hybridization without greatly changing the configuration of the propulsion device. In addition, for example, when the motor 50 is disposed in a lower portion inside the speed reducer case 48, the inverter 60 is preferably mounted on an outer wall of a lower portion of the speed reducer case 48. This makes it possible to bring the motor 50 and the inverter 60 close to each other and shorten the length of electric wiring between both components.

The present example discloses a configuration in which the motor 50 is attached to a surface of the speed reducer case 48 on a side of the propeller 20 (a side of the propeller shaft 42), but the configuration is not limited to this configuration, and the motor 50 may be attached to a surface on a side of the engine 30 (a side of the engine shaft 41).

In the present example, the description has been given on the premise that the speed reducer 40 performs two-stage reduction between the engine shaft 41 and the propeller shaft 42, but reduction in three or more stages may be performed. In this case, a plurality of rotating shafts each having two cogs mesh with each other between the first gear 44 and the second gear 45, and the motor 50 is connected to any of the plurality of rotating shafts and inputs rotational force from the motor 50 to the connected rotating shaft.

### [Second Example]

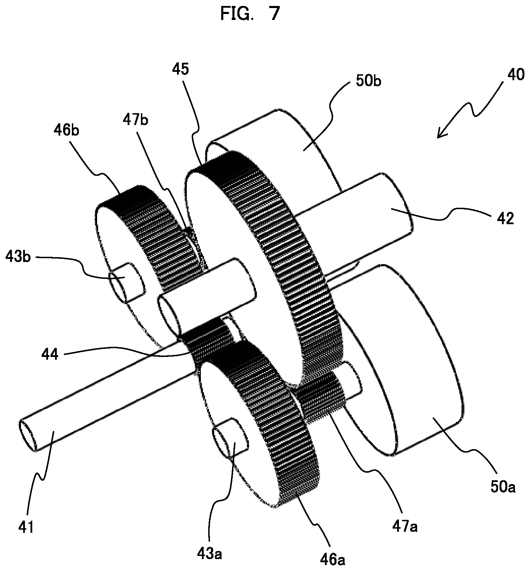

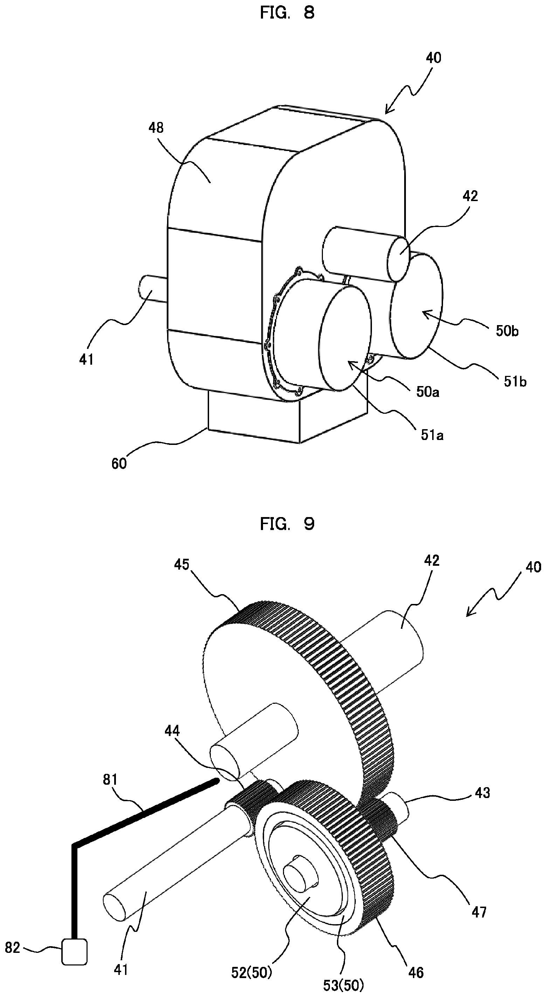

Next, a second example of the propulsion device 10 according to the present invention will be described with reference to FIGS. 7 and 8. FIG. 7 is a schematic diagram illustrating configurations of the speed reducer 40 and the motor 30 of the propulsion device 10 according to the second example of the present invention. FIG. 8 is a schematic diagram illustrating external appearances of the speed reducer 40 and the motor 30 of the propulsion device 10 according to the second example of the present invention. In FIG. 7, a case of the speed reducer 40 is omitted in order to illustrate a connection configuration between shafts and cogs.

The speed reducer 40 of the propulsion device 10 of the present example differs from the propulsion device 10 of the first example described above in that two intermediate shafts 43a and 43b that transmit rotation from the engine shaft 41 to the propeller shaft 42 are disposed in parallel, and rotation shafts of two motors 50a and 50b are respectively connected to the two intermediate shafts 43a and 43b. The other configurations are the same as those of the propulsion device 10 of the first example.

On one intermediate shaft 43a, a third gear (third cog) 46a and a fourth gear (fourth cog) 47a are integrally configured with coaxial rotation axes, the first gear 44 and the third gear 46a mesh with each other, and the second gear 45 and the fourth gear 47a mesh with each other. On the other intermediate shaft 43b, a third gear (third cog) 46b and a fourth gear (fourth cog) 47b are integrally configured with coaxial rotation axes, the first gear 44 and the third gear 46b mesh with each other, and the second gear 45 and the fourth gear 47b mesh with each other.

Although not illustrated in FIG. 7, as in the first example, the clutch 71 may be provided to the engine shaft 41, and the clutch 72 may be provided to each of the intermediate shafts 43a and 43b.

As illustrated in FIG. 8, the speed reducer 40 is disposed in the speed reducer case 48, housings 51a and 51b and stators of the two motors 50a and 50b are mechanically connected to an outer wall of the speed reducer case 48, and rotors corresponding to inner peripheries of the motors are disposed coaxially with the two intermediate shafts 43a and 43b. In consideration of maintainability such as replacement and repair of the motors 50a and 50b, the speed reducer case 48 and the housings of the motors 50a and 50b are configured as separate bodies that can be separated.

The electric hybrid propulsion device 10 of the present implementation example can use output of the two motors 50a and 50b to assist engine output, so that motor output per motor can be reduced, and a smaller electric hybrid propulsion device can be realized. In addition, because the intermediate shafts are arranged in two parallel lines, loads applied to gears and shafts are reduced, and therefore effects are also obtained in terms of reliability and component life. Furthermore, when a failure occurs in one of the motors 50a and 50b, an effect of redundancy that allows assistance to be continued by the other motor can also be expected.

### [Third Example]

Next, a third embodiment of the propulsion device 10 according to the present invention will be described with reference to FIG. 9. FIG. 9 is a schematic diagram illustrating configurations of the speed reducer 40 and the motor 50 of the propulsion device 10 according to the third example of the present invention.

The propulsion device 10 of the present example differs from the propulsion devices 10 of the first and second examples described above in that the motor 50 is incorporated in the third gear 46 integrally formed with the intermediate shaft 43 that transmits rotation from the engine shaft 41 to the propeller shaft 42. The other configurations can be configured in the same manner as the propulsion device 10 of the first example or the second example.

The motor 50 of the present example has an outer rotor structure in which an inner peripheral portion is a stator 52 and an outer peripheral portion is a rotor 53, the rotor 3 is configured integrally with the third gear 46, and the stator 52 is disposed in an inner peripheral portion (inner peripheral side) of the third gear 46 and is fixed, for example, to an inner wall of the speed reducer case 48. That is, the stator of the motor 50 is fixed to the speed reducer case 48. A rotation shaft of the rotor 52 is coaxial with the intermediate shaft 43.

The speed reducer 40 is provided with a nozzle 81 that sprays oil and a pump 82 that supplies oil to the nozzle 81 in order to cool and lubricate the gears 44 to 47 in the speed reducer case 48. In this case, the motor 50 is cooled by oil sprayed in order to cool and lubricate the gears 44 to 47 in the speed reducer case 48.

The propulsion device 10 of the present example makes it possible to realize a smaller propulsion device by mounting the assisting motor 50 inside the existing gear 46, compared with a configuration in which the motor 50 is mounted outside the speed reducer case 48.

According to the propulsion device 10 according to the present invention described above, a propulsion device of an aircraft can be hybridized without increasing the size of the propulsion device, and reduction in energy consumption and reduction in CO2 emissions can be achieved.

A propulsion device (propulsion system) using a turboprop engine is often reduced in speed by two-stage gears using an intermediate shaft due to a difference in rotation speed between an engine and a propeller, but according to the example according to the present invention, a hybrid configuration in which output of a motor is connected without using an additional shaft or gear is possible, and replacement with a normal propulsion device that is not hybrid is easy.

The propulsion device 10 for an aircraft according to the present invention described above includes the following features.
(1) The engine 30 that outputs rotational force;
   the propeller 20 that generates propulsion force;
   the motor 50 that outputs rotational force;
   the input shaft 41 that has the first cog (first gear) 44 and receives the rotational force output from the engine 30;
   the output shaft 42 that has the second cog (second gear) 45 and outputs rotational force to the propeller 20;
   and the intermediate shaft 43 that has the third cog (third gear) 46 and the fourth cog (fourth gear) 47 are included, and
   the first cog 44 and the third cog 46 mesh with each other,
   the second cog 45 and the fourth cog 47 mesh with each other, and
   the motor 50 is connected to the intermediate shaft 43, and the rotational force from the motor 50 is input to the intermediate shaft 43.
(2) The first cog 44, the second cog 45, the third cog 46, and the fourth cog 47 constitute the speed reducer 40, and
   there is a relationship satisfying Ri>Rm>Ro among the rotation speed Ri of the input shaft 41, the rotation speed Rm of the intermediate shaft 43, and the rotation speed Ro of the output shaft 42.
(3) The speed reducer 40 is disposed inside the speed reducer case 48, and
   the stator of the motor 50 is fixed to the speed reducer case 48.
(4) The speed reducer 40 is disposed inside the speed reducer case 48,
   the motor 50 has an outer-rotor type configuration,
   the rotor of the motor 50 is configured integrally with the third cog 46, and
   the stator of the motor 50 is fixed to the speed reducer case 48.
(5) The motor 50 according to (4) is cooled by oil sprayed in order to cool and lubricate cogs inside the speed reducer case 48.
(6) The rotation shaft of the motor 50 and the intermediate shaft 43 are connected via the clutch 72, and
   coupling and disconnection between the rotation shaft of the motor 50 and the intermediate shaft 43 can be controlled by operating the clutch 72 according to an operating state.
(7) Two or more intermediate shafts (43a and 43b) including the third cog 46 and the fourth cog 47 are provided, and
   a plurality of power transmission paths from the input shaft 41 to the output shaft 42 are configured.
(8) The motor 50 operates as a generator, converts rotational force into electric power, and supplies the electric power to the outside.
(9) The inverter 60 that supplies electric power for driving the motor 50 is disposed on an outer wall of the speed reducer case 48 that accommodates the speed reducer 40.
(10) A plurality of rotation shafts each having two cogs mesh with each other between the first cog 44 and the second cog 45, and
   the motor 50 is connected to any of the plurality of rotation shafts and inputs rotational force from the motor 50 to the connected rotation shaft.

The embodiment of the hybrid propulsion device 10 according to the present invention has been described in detail above with reference to the drawings, but the specific configuration is not limited to this embodiment, and design changes and the like within a range not departing from the gist of the present disclosure are included in the present invention.

For example, the present invention is not limited to the examples described above, and includes various modifications. For example, the examples described above have been described in detail in order to explain the present invention in an easily understandable manner, and are not necessarily limited to examples including all configurations. In addition, a part of a configuration of one example can be replaced with a configuration of another example, and a configuration of another example can also be added to a configuration of one example. In addition, another configuration can be added to, deleted from, or substituted for a part of the configuration of each example.

### Reference Signs List

1 aircraft
10 propulsion device (hybrid propulsion device)
12 nacelle
13 air intake
20 propeller
30 engine
40 speed reducer
41 engine shaft (input shaft)
42 propeller shaft (output shaft)
43, 43a, 43b intermediate shaft (intermediate axis)
44 first gear (first cog)
45 second gear (second cog)
46, 46a, 46b third gear (third cog)
47, 47a, 47b fourth gear (fourth cog)
48 speed reducer case
50, 50a, 50b motor

## Claims

1. A propulsion device for an aircraft, the propulsion device comprising:
an engine that outputs rotational force;
a propeller that generates propulsion force;
a motor that outputs rotational force;
an input shaft that has a first cog and receives the rotational force output from the engine;
an output shaft that has a second cog and outputs rotational force to the propeller;
and an intermediate shaft that has a third cog and a fourth cog,
wherein
the first cog and the third cog mesh with each other,
the second cog and the fourth cog mesh with each other, and
the motor is connected to the intermediate shaft, and rotational force from the motor is input to the intermediate shaft.

2. The propulsion device for an aircraft according to claim 1, wherein
the first cog, the second cog, the third cog, and the fourth cog constitute a speed reducer, and
there is a relationship satisfying Ri>Rm>Ro among a rotation speed Ri of the input shaft, a rotation speed Rm of the intermediate shaft, and a rotation speed Ro of the output shaft.

3. The propulsion device for an aircraft according to claim 2, wherein
the speed reducer is disposed inside a speed reducer case, and
a stator of the motor is fixed to the speed reducer case.

4. The propulsion device for an aircraft according to claim 2, wherein
the speed reducer is disposed inside a speed reducer case,
the motor has an outer-rotor type configuration,
a rotor of the motor is configured integrally with the third cog, and
a stator of the motor is fixed to the speed reducer case.

5. The propulsion device for an aircraft according to claim 4, wherein
the motor is cooled by oil sprayed in order to cool and lubricate cogs inside the speed reducer case.

6. The propulsion device for an aircraft according to claim 2, wherein
a rotation shaft of the motor and the intermediate shaft are connected via a clutch, and
coupling and disconnection between the rotation shaft of the motor and the intermediate shaft are controlled by operating the clutch according to an operating state.

7. The propulsion device for an aircraft according to claim 2, wherein
two or more of the intermediate shafts including the third cog and the fourth cog are provided, and
a plurality of power transmission paths from the input shaft to the output shaft are configured.

8. The propulsion device for an aircraft according to claim 2, wherein
the motor operates as a generator, converts rotational force into electric power, and supplies the electric power to the outside.

9. The propulsion device for an aircraft according to claim 2, wherein
an inverter that supplies electric power for driving the motor is disposed on an outer wall of a speed reducer case that accommodates the speed reducer.

10. The propulsion device for an aircraft according to claim 1, wherein
a plurality of rotation shafts each having two cogs mesh with each other between the first cog and the second cog, and
the motor is connected to any of the plurality of rotation shafts and inputs rotational force from the motor to the connected rotation shaft.
